Europäisches Patentamt

European Patent Office

Office européen des brevets

(11) Numéro de publication: **0 406 045 A1**

# (12) DEMANDE DE BREVET EUROPEEN

(21) Numéro de dépôt: **90401611.0**

(22) Date de dépôt: **12.06.90**

(51) Int. Cl.5: **B29C 33/20, B29C 67/18, B29C 35/08**

(30) Priorité: **28.06.89 FR 8908606**

(43) Date de publication de la demande:
**02.01.91 Bulletin 91/01**

(84) Etats contractants désignés:
**BE DE ES GB IT LU NL SE**

(71) Demandeur: **ANVER**
**2, rue Suchet**
**F-94701 Maisons-Alfort Cédex(FR)**

(72) Inventeur: **Oriez, Robert**
**75 avenue Ronsard**
**F-41100 Vendome(FR)**
Inventeur: **Gras, Elie**
**150 Chemin de la Carandière**
**F-69730 Genay(FR)**

(74) Mandataire: **Orès, Bernard et al**
**Cabinet ORES 6, Avenue de Messine**
**F-75008 Paris(FR)**

(54) **Procédé et installation de moulage haute fréquence de matière plastique.**

(57) Procède et installation de moulage haute fréquence de matière plastique à l'aide d'un moule en un matériau usuel pour l'application de cette technique, comme un élastomère de silicone ou matériau analogue.

Le moule (M) est maintenu verrouillé lors du refroidissement de la matière plastique mise en forme par l'effet d'une dépression provoquée à l'intérieur (i) du moule (M) après application du champ électrique haute fréquence, de préférence à l'aide d'un ou d'embout(s) (12, 13) muni(s) de clapet(s) anti-retour (18, 19) et débouchant au travers de la paroi du moule (M) à l'intérieur de celui-ci et qui sont reliés à une source de vide (10).

Application : le procédé et l'installation peuvent être utilisés entre autre, pour la fabrication de vitres d'automobiles à joint périphérique surmoulé, intégré.

FIG.1

# PROCEDE ET INSTALLATION DE MOULAGE HAUTE FREQUENCE DE MATIERE PLASTIQUE

L'invention a pour objet un procédé et une installation de moulage haute fréquence de matière plastique.

On connaît déjà, par exemple par FR-A-2 598 959, au nom de la Demanderesse, un procédé et un dispositif de fabrication d'objets moulés en matière plastique à partir de plastisol liquide injecté dans un moule, lequel est soumis à l'action d'un champ électrique haute fréquence d'un générateur approprié. Une telle technique est mise en oeuvre, par exemple, pour la fabrication d'articles de maroquinerie ou de pièces pour chaussures. Pour étendre le procédé et son dispositif de mise en oeuvre à d'autres applications, comme la fabrication de pièces surmoulées, telles que, par exemple, des vitres ou glaces d'automobiles à joint périphérique intégré, la Demanderesse a déjà proposé, dans FR-A-88 05 968 du 4 Mai 1988, un procédé et un appareil perfectionnés propres à être mis en oeuvre avec des plastisols ou d'autres matières plastiques liquides, notamment celles du type polyuréthanne ou polyéther.

Le procédé et l'appareil selon cette Demande de Brevet français donnent entière satisfaction. Toutefois, la cadence de fabrication n'est pas aussi rapide qu'on pourrait le souhaiter et cela parce que la mise en oeuvre du procédé exige, après application du champ haute fréquence, que les deux demi-coquilles du moule soient maintenues appliquées à pression l'une contre l'autre un certain temps. Ceci est réalisé, dans un appareil à un seul générateur de champ, en maintenant le moule fermé à verrouillage pendant quelques minutes entre les plateaux d'une presse associée au générateur. Ce dernier n'est donc pas accessible pendant ce laps de temps, qui est celui au cours duquel se produit la polymérisation et un rendement élevé de l'appareil ne peut alors être obtenu que par une installation du type carrousel ou par des moyens permettant le déplacement du générateur, c'est-à-dire deux solutions à à la fois mécaniquement complexes et onéreuses.

Il en est de même en ce qui concerne l'installation décrite dans US-A-3 444 275 où le verrouillage mécanique d'une presse est commandé par un vérin.

C'est, par conséquent, un but général de l'invention de fournir un procédé et une installation de moulage haute-fréquence de matière plastique permettant d'obtenir des cadences de fabrication élevées dans une installation à un générateur et presse associée.

Tirant parti de la nature du matériau constitutif du moule généralement utilisé dans les procédés et installations de moulage haute fréquence de matière plastique, -élastomère de silicone ou matériau analogue-, le problème ainsi posé est résolu par le fait que le moule est maintenu verrouillé, lors du refroidissement de la matière plastique mise en forme, par l'effet d'une dépression provoquée à l'intérieur du moule après application du champ électrique haute fréquence.

La dépression à l'intérieur du moule est obtenue, le plus simplement, en reliant un ou des embout(s) muni(s) de clapet(s) anti-retour et débouchant à l'intérieur du moule en traversant la paroi de celui-ci, à une source de vide.

On réalise ainsi, de façon simple et sûre, un verrouillage du moule lequel est conservé au cours du refroidissement de la matière plastique polymérisée, un tel refroidissement pouvant alors être conduit à l'extérieur de la presse associée au générateur du champ haute fréquence.

Une telle mesure permet, complémentairement, et sans faire appel à d'autres moyens, de maintenir réunies entre elles les deux demi-coquilles constitutives du moule, de sorte que ce dernier peut être aisément manipulé, par exemple pour son déplacement et son passage dans un tunnel de refroidissement, avec pour conséquence une réduction encore plus importante de la durée du cycle opératoire.

Une installation selon l'invention, pour la mise en oeuvre du procédé qui vient d'être décrit, comprend alors un générateur d'un champ électrique haute fréquence, une presse associée audit générateur pour le maintien du moule lors de l'application dudit champ électrique haute fréquence, au moins un poste de chargement et de déchargement des moules, des moyens de manutention et de convoyage des moules dudit poste jusque dans la presse et vice-versa et au moins une source de vide et elle est caractérisée par des moyens pour relier la source de vide à l'intérieur d'un moule dans lequel est injectée la matière plastique à polymériser afin d'assurer le verrouillage dudit moule immédiatement après application du champ électrique haute fréquence à l'aide du générateur et alors que le moule est dans la presse, des moyens étant prévus audit poste de chargement et déchargement pour faire cesser le vide dans le moule, afin de séparer ses deux demi-coquilles constitutives et permettre l'extraction d'une pièce moulée.

Selon une autre caractéristique de l'invention, lesdits moyens pour relier la source de vide à l'intérieur d'un moule comportent au moins un embout muni d'un clapet anti-retour en saillie sur la paroi du moule et qui pénètre jusque dans la cavité interne du moule en traversant la paroi de celui-ci, ainsi que des moyens de canalisation et de raccord propres à être interposés entre ladite source de vide et ledit embout.

Selon encore une autre caractéristique de l'invention, dans une installation prévue pour la fabrication de vitres ou glaces d'automobiles à joint périphérique intégré, le vide est appliqué par deux embouts débouchant dans la cavité intérieure du moule, de part et d'autre d'une vitre ou objet analogue à surmouler pour former ledit joint périphérique intégré.

Enfin, selon une autre caractéristique de l'invention, l'installation comprend en outre un tunnel de refroidissement à travers lequel circulent les moules à leur sortie de la presse associée au générateur de champ électrique haute fréquence, en étant verrouillé sous l'effet de la dépression provoquée à l'intérieur du moule après application dudit champ électrique haute fréquence.

L'invention sera bien comprise par la description qui suit, faite à titre d'exemple et en référence au dessin annexé dans lequel :

- la figure 1 est une vue en coupe, très schématique, d'un moule propre à être mis en oeuvre dans un procédé et une installation selon l'invention ;
- la figure 2 est un schéma en blocs-diagramme d'une installation selon l'invention ;
- la figure 3 est également un schéma en blocs-diagramme illustrant la structure d'une installation selon l'invention.

Pour la fabrication par moulage haute fréquence de matière plastique, et en particulier pour la fabrication d'une pièce V comme une vitre ou glace d'automobile sur laquelle est surmoulé un cordon ou joint périphérique c de matière plastique à l'aide d'un moule M constitué par une première demi-coquille $m_1$ et une seconde demi-coquille $m_2$ en élastomère de silicone, on met tout d'abord en place la pièce V puis, après introduction de la matière plastique dans le moule préalablement refermé, celui-ci est amené au droit d'un générateur électrique haute fréquence montré très schématiquement par la masse G. Le générateur est habituellement fixe et disposé au voisinage d'une presse dont les plateaux $p_1$ et $p_2$ sont propres à coopérer avec les demi-coquilles $m_1$ et $m_2$ du moule, elles-mêmes généralement placées sur des supports, non représentés. Après rapprochement des plateaux $p_1$ et $p_2$ pour le verrouillage à pression du moule, comme schématisé par la flèche F, l'application du champ électrique haute fréquence provoque la polymérisation de la matière plastique, par exemple suivant le cordon ou joint périphérique c . De façon en soi connue, le moule M est maintenu sous les plateaux de la presse durant toute la phase de polymérisation et de refroidissement qui suit l'application du champ haute fréquence, de sorte que le générateur n'est pas disponible durant ce laps de temps qui peut être de l'ordre de quelques minutes.

Pour pallier l'inconvénient que constitue l'indisponibilité du générateur aussi longtemps que le moule est maintenu après application du champ haute fréquence dans la presse associée audit générateur, l'invention prévoit d'assurer le verrouillage du moule M,-après application du champ électrique-, par l'effet d'une dépression engendrée à l'intérieur du moule.

Pour ce faire, l'invention prévoit dans la forme de réalisation décrite et représentée d'associer au dispositif en soi connu une source de vide 10 et des moyens 11 pour relier ladite source de vide à l'intérieur du moule après application du champ électrique haute fréquence. De façon plus précise, lesdits moyens 11 comprennent deux embouts 12 et 13 en saillie sur les parois 14 et 15 des deux demi-coquilles $m_1$ et $m_2$, respectivement, et qui débouchent, par des canaux traversants 16 et 17, respectivement, à l'intérieur i du moule de part et d'autre de la pièce V.

Chaque embout 12, 13 est muni d'un clapet anti-retour 18, 19, respectivement, de sorte que lorsque les embouts 12 et 13 sont abouchés par des raccords 20 et 21 à des canalisations 22 et 23 reliées à la source de vide 10, celui-ci est établi à l'intérieur i de la cavité du moule, de part et d'autre de la pièce V.

Le vide est maintenu de façon sûre à l'intérieur de la cavité du moule en raison de la nature même du matériau constitutif de celui-ci, généralement un élastomère de silicone ou un matériau analogue, qui fait que l'application des deux demi-coquilles $m_1$ et $m_2$ l'une contre l'autre est étanche à l'air, sans qu'il soit nécessaire de prendre de précautions particulières.

Le procédé selon l'invention et les moyens pour sa mise en oeuvre qui viennent d'être décrits permettent ainsi, et dès après application du champ électrique haute fréquence provoquant la polymérisation de la matière plastique introduite dans le moule, de maintenir verrouillées l'une sur l'autre les deux demi-coquilles $m_1$ et $m_2$ qui le constituent, de sorte que l'ensemble unitaire ainsi constitué peut être extrait de la presse, libérant l'accès à celle-ci et au générateur pour une nouvelle application à un autre moule du champ électrique de polymérisation, avec pour conséquence une diminution importante de la durée du cycle de fabrication.

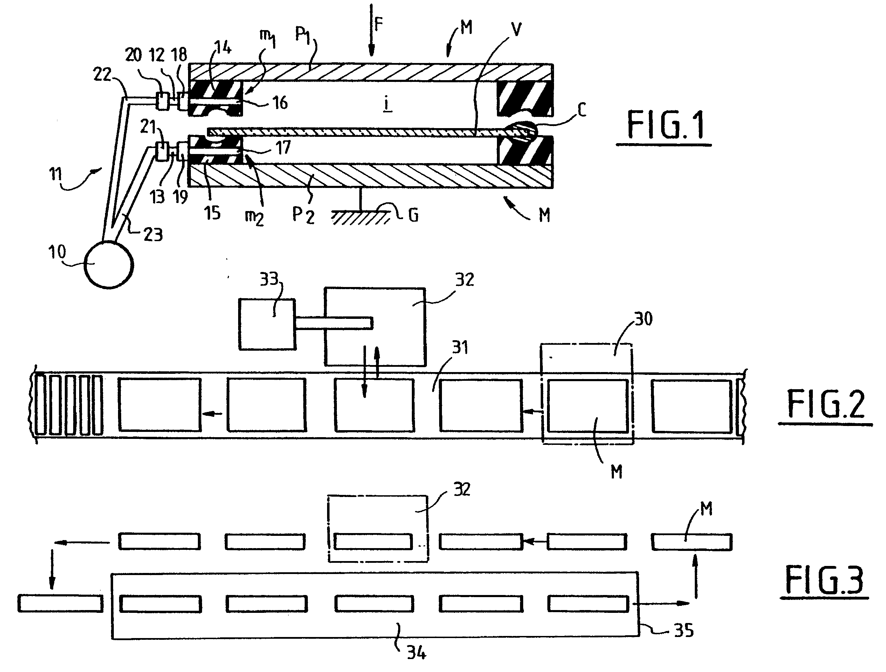

Ce dernier peut alors être conduit à l'aide d'une installation comme illustrée sur les figures 2 et 3, c'est-à-dire comportant un premier poste 30 de chargement et de déchargement du moule M, des organes de convoyage 31 amenant le moule dans une presse 32 où, après application du champ à l'aide d'un générateur haute fréquence 33, le vide est établi à l'intérieur de la cavité du moule, de sorte qu'après ouverture de la presse ledit moule en est extrait et transféré par les moyens 31 au travers d'un tunnel de refroidissement 34, à la sortie 35 duquel le moule M est à nouveau amené au droit du poste 30 de déchargement où le démoulage est effectué après que le vide ait été supprimé.

**Revendications**

1. Procédé de moulage haute fréquence de matière plastique à l'aide d'un moule en un matériau usuel pour l'application de cette technique, comme un élastomère de silicone ou matériau analogue, caractérisé en ce que le moule est maintenu verrouillé lors du refroidissement de la matière plastique mise en forme par l'effet d'une dépression provoquée à l'intérieur (i) du moule (M) après application du champ électrique haute fréquence.

2. Procédé selon la revendication 1, caractérisé en ce que, pour obtenir la dépression souhaitée à l'intérieur (i) du moule (M), on prévoit de relier un ou des embout(s) (12, 13) muni(s) de clapet(s) anti-retour (18, 19) et débouchant au travers de la paroi du moule (M) à l'intérieur de celui-ci, à une source de vide (10).

3. Installation pour la mise en oeuvre du procédé selon l'une quelconque des revendications précédentes, comportant un générateur (33) d'un champ électrique haute fréquence, une presse (32) associée audit générateur pour le maintien du moule lors de l'application dudit champ électrique haute fréquence, au moins un poste (30) de chargement et de déchargement des moules (M), des moyens de manutention et de convoyage (31) des moules dudit poste jusque dans la presse et vice-versa et au moins une source de vide (10), caractérisée en ce qu'elle comprend en outre des moyens (11) pour relier ladite source à l'intérieur (i) d'un moule (M) dans lequel est injectée la matière plastique à polymériser afin d'assurer le verrouillage dudit moule immédiatement après application du champ électrique haute fréquence à l'aide du générateur (33) et alors que le moule (M) est dans la presse (32) ainsi que des moyens audit poste de démoulage pour faire cesser le vide dans le moule afin de séparer ses deux demi-coquilles constitutives ($m_1$, $m_2$) et permettre l'extraction d'une pièce moulée (V).

4. Installation selon la revendication 3, caractérisée en ce que lesdits moyens (11) pour relier la source de vide (10) à l'intérieur (i) d'un moule (M) comportent au moins un embout (12, 13) muni d'un clapet anti-retour (18, 19) en saillie sur la paroi du moule, et qui pénètre jusque dans la cavité interne du moule en traversant la paroi de celui-ci, ainsi que des moyens de canalisation et de raccord (22, 23 ; 20, 21) propres à être interposés entre ladite source de vide (10) et ledit embout (12, 13).

5. Installation selon la revendication 3 ou 4, notamment pour la fabrication de vitres ou glaces d'automobiles à joint périphérique intégré, caractérisée en ce que le vide est appliqué par deux embouts (12, 13) débouchant dans la cavité intérieure du moule de part et d'autre de ladite vitre (V) ou objet analogue à surmouler pour former ledit joint périphérique intégré (C).

6. Installation selon l'une quelconque des revendications 3 à 5, caractérisée en ce qu'elle comprend en outre un tunnel de refroidissement (34) à travers lequel circulent les moules (M) à leur sortie de la presse (32) associée au générateur (33) de champ électrique haute fréquence, en étant verrouillé sous l'effet de la dépression provoquée à l'intérieur du moule après application dudit champ électrique haute fréquence.

FIG.1

FIG.2

FIG.3

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| D,X | US-A-3 444 275 (J.A. WILLETT)<br>* Résumé; colonne 1, lignes 59-60; colonne 2, lignes 29-39; colonne 2, ligne 66 - colonne 3, ligne 17, et spécialement lignes 30-31; revendications; figure 1 * | 1 | B 29 C 33/20<br>B 29 C 67/18<br>B 29 C 35/08 |
| Y | --- | 3,5,6 | |
| Y | FR-A-2 251 421 (FLACHGLAS AG DELOG DETAG)<br>* Page 4, lignes 4-28; page 6, lignes 3-11; revendications 1,12,13,17,40; figures 1,3,4,5,6,7,11 * | 3,5,6 | |
| A | --- FR-A-2 140 364 (HOLSTEIN & KAPPERT MASCHINENFABRIK PHÖNIX)<br>* Revendications 1,3; figure * | 2,4 | |
| A | --- US-A-3 824 062 (R.E. FARRELL)<br>* Figure 1; colonne 2, lignes 35-61 * | 6 | |
| A | --- BE-A- 652 964 (GUSTAV STEIGMEYER)<br>* Page 3, lignes 1-6; revendications; figure 1 * | 1 | **DOMAINES TECHNIQUES RECHERCHES (Int. Cl.5)**<br><br>B 29 C<br>B 29 D |
| A | --- GB-A-1 060 908 (KOPPERS CO., INC.)<br>* Revendications; figures *<br>----- | 1 | |

Le présent rapport a été établi pour toutes les revendications

| Lieu de la recherche | Date d'achèvement de la recherche | Examinateur |
|---|---|---|
| LA HAYE | 05-10-1990 | MOLTO PINOL F.J. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
..............................................................
& : membre de la même famille, document correspondant

EPO FORM 1503 03.82 (P0402)